# EUROPÄISCHE PATENTSCHRIFT

(11) **EP 3 882 828 B1**
(45) Veröffentlichungstag und Bekanntmachung des Hinweises auf die Patenterteilung: **30.04.2025**
(21) Anmeldenummer: 21161941.6
(22) Anmeldetag: 11.03.2021
(51) Int. Cl.: G06Q 10/06, G06Q 10/20, G06Q 50/06

(54) **VERFAHREN ZUR ÜBERWACHUNG EINES WASSERVERSORGUNGSNETZES, WASSERVERSORGUNGSNETZ UND STÖRSTELLENDETEKTIONSSYSTEM**
METHOD FOR MONITORING A WATER SUPPLY NETWORK, WATER SUPPLY NETWORK AND FAULT LOCATION DETECTION SYSTEM
PROCÉDÉ DE SURVEILLANCE D'UN RÉSEAU D'ALIMENTATION EN EAU, RÉSEAU D'ALIMENTATION EN EAU ET SYSTÈME DE DÉTECTION DES DÉFAUTS

(30) Priorität: 20.03.2020 DE 102020107780
(43) Veröffentlichungstag der Anmeldung: 22.09.2021
(73) Patentinhaber: Grohe AG, 58653 Hemer (DE)
(72) Erfinder: DEPIERE, Bert, 3150 Wakkerzeel (BE); SPECK, Philip, 58636 Iserlohn (DE); VELTRUP, Robert, 40211 Düsseldorf (DE)

(56) Entgegenhaltungen:
- EP-A1- 2 778 296
- WO-A1-2009/121138
- WO-A1-2018/085904
- US-A1- 2013 197 833

## Beschreibung

Die Erfindung betrifft ein Verfahren zur Überwachung eines Wasserversorgungsnetzes, welches eine (zentrale) Wasserverteileinrichtung, eine Vielzahl von Wasserkanälen und Gebäudewasseranschlüsse aufweist gemäß dem Oberbegriff von Anspruch 1. Ein solches Verfahren ist beispielsweise in den Druckschriften EP2778296A1 und US2013/197833A1 sowie auch in der WO2009/121138A1 beschrieben. Weiter betrifft die Erfindung ein solches Wasserversorgungsnetz selbst sowie ein Störstellendetektionssystem, mit dem eine Störstelle bezüglich eines solchen Wasserversorgungsnetzes detektiert werden kann.

Die öffentliche Infrastruktur der Trinkwasserversorgung stellt eine Kombination von einer Vielzahl und sich lang erstreckender Verteilleitungen sowie der sogenannten "last mile"-Verrohrung dar, welche zu den individuellen Gebäuden bzw. Verbrauchern geführt wird.

Bezüglich solch großer Wasserversorgungsnetze ist es nicht einfach festzustellen, wenn das Wasserversorgungsnetz schadhaft oder die Wasserqualität ungenügend ist. Dies kann insbesondere dazu führen, dass solche Beschädigungen und/oder Verunreinigungen im Wasserversorgungsnetz spät erkannt oder nur mit sehr großem Aufwand wieder beseitigt werden können.

Von besonderer Schwierigkeit ist hierbei auch, dass die Bedingungen in einem solchen Wasserversorgungsnetz stark variieren können, insbesondere aufgrund der Vielzahl von Verbrauchern, unterschiedlichster Verbrauchsgewohnheiten und/oder verschiedenartigster Schwierigkeiten bei der Erreichung von Gebäuden oder deren Verrohrung.

Hiervon ausgehend ist es Aufgabe der vorliegenden Erfindung, die mit Bezug auf den Stand der Technik geschilderten Probleme zumindest teilweise zu lösen. Insbesondere sollen ein Verfahren zur Überwachung eines Wasserversorgungsnetzes, ein Wasserversorgungsnetz sowie ein Störstellendetektionssystem vorgeschlagen werden, mit dem unerwünschte oder unvorhergesehene Ereignisse bezüglich der Wasserversorgung schnell und/oder zielsicher erfasst und gegebenenfalls Maßnahmen zur schnellen Beseitigung dieser Störungen getroffen werden können.

Diese Aufgaben werden gelöst mit einem Verfahren zur Überwachung eines Wasserversorgungsnetzes gemäß den Merkmalen des Patentanspruchs 1. Vorteilhafte Weiterbildungen einschließlich eines Wasserversorgungsnetzes sowie eines Störstellendetektionssystems sind in den abhängigen Patentansprüchen angegeben. Es ist darauf hinzuweisen, dass die in den Patentansprüchen aufgeführten Merkmale in beliebiger, technologisch sinnvoller Weise miteinander kombiniert werden können und weitere Ausgestaltungen der Erfindung aufzeigen. Die Beschreibung, insbesondere auch im Zusammenhang mit den Figuren, erläutert die Erfindung und führt weitere Ausführungsvarianten an.

Hierzu trägt das nachfolgend erläuterte Verfahren zur Überwachung eines Wasserversorgungsnetzes bei. Das Wasserversorgungsnetz weist regelmäßig (mindestens) eine Wasserverteileinrichtung, eine Vielzahl Wasserkanäle und Gebäudewasseranschlüsse auf.

Eine Wasserverteileinrichtung kann einen Wasserspeicher, wie beispielsweise einen See, einen Tank oder dergleichen, umfassen. Die Wasserverteileinrichtung hat zudem Mittel, für die daran angeschlossenen Wasserkanäle Wasser mit einer vorgebbaren Eigenschaft bereitzustellen, insbesondere mit einer vorbestimmten Wasserqualität und/oder einem vorbestimmten Druck. Hierfür können Pumpen, Ventile, Sensoren, Filter etc. ebenfalls vorgesehen sein. Das Wasser wird nun kontrolliert von einer solchen Wasserverteileinrichtung in mindestens einen Wasserkanal abgegeben. Häufig existiert eine Art zentraler Wasserkanal, von dem aus eine Vielzahl von Verzweigungen abgeht, mit dem dann Anschluss-Wasserkanäle gebildet sind, die bis hin zum Gebäudewasseranschluss verlaufen, die sogenannte "last mile". Die Wasserkanäle können nach Art eines Schachtes und/oder mit einer Verrohrung ausgeführt sein, die beispielsweise mit Metallrohren und/oder Kunststoffrohren gebildet sind. Die Wasserkanäle sind insofern druckdicht ausgeführt, sodass insbesondere gewährleistet ist, dass der von der Wasserverteileinrichtung eingestellte Wasserdruck sich nur in akzeptablem Maße über die Wasserkanäle hin abbaut, beispielsweise nur mit einer Druckdifferenz von maximal 20 %, wobei bevorzugt der Druck am Gebäudewasseranschlüssen weniger als 10 % vom (zentral) bereitgestellten abweicht. Der Gebäudewasseranschluss ist vielfach für ein (einzelnes) Gebäude, eine Fabrik oder eine sonstige Verbrauchereinheit ein zentrales Anschlusselement, welches zum Beispiel ein zentrales Verschlussventil umfasst. Mit einem solchen Gebäudewasseranschluss ist es insbesondere möglich, bedarfsgerecht Wasser aus den Wasserkanälen dem Gebäude zuzuführen bzw. dort bereitzuhalten. Insofern ist ein solcher Gebäudewasseranschluss insbesondere dazu eingerichtet, bedarfsgerecht einen Durchfluss von Wasser ausgehend von den Wasserkanälen hin zu dem Gebäude bzw. dem Verbraucher zuzulassen oder zu unterbinden.

Das hier vorgeschlagene Verfahren zur Überwachung umfasst zumindest die folgenden Schritte:
a) Erfassen mindestens einer lokalen Wasserzustandsgröße im Bereich einer Mehrzahl von Gebäudewasseranschlüssen;
b) Erfassen mindestens einer zentralen Wasserzustandsgröße in zumindest einem Bereich eines Wasserkanals oder der Wasserverteileinrichtung;
c) Vergleichen der Wasserzustandsgrößen miteinander;
d) Detektieren zumindest einer Störstelle bezüglich wenigstens einer der Wasserkanäle basierend auf dem Vergleich nach Schritt c).

Die hier gewählte Reihenfolge der Schritte a) bis d) muss nicht zwingend sequenziell nachfolgend in dieser Reihenfolge durchgeführt werden, es ist vielfach möglich, die Schritte zumindest teilweise zeitlich zu überlagern oder sogar simultan auszuführen. Insbesondere ist auch möglich, die Schritte im Rahmen des Verfahrens unterschiedlich oft zu wiederholen, gegebenenfalls auch bevor ein Folgeschritt ausgelöst wird.

Das Erfassen der mindestens einen lokalen Wasserzustandsgröße gemäß Schritt a) kann rechnerisch oder sensorisch erfolgen. Die Wasserzustandsgröße kann unmittelbar aus dem Wasser im Bereich eines Gebäudewasseranschlusses ermittelt und/oder darauf basierend errechnet werden. "Lokal" meint hiermit insbesondere, dass die Wasserzustandsgröße repräsentativ für den Wasserzustand im Bereich des Gebäudewasseranschlusses ist, also insbesondere im Bereich der "last mile" und/oder in Nachbarschaft bzw. exakt an dem Gebäudewasseranschluss. Mit anderen Worten heißt es insbesondere, dass eine lokale Wasserzustandsgröße charakteristisch ist für den Zustand des bereitgestellten Wassers im Bereich des Gebäudewasseranschlusses. Dabei wird regelmäßig nicht nur eine einzelne lokale Wasserzustandsgröße im Bereich eines einzelnen Gebäudewasseranschlusses erfasst, sondern gleichzeitig und/oder zeitlich nacheinander eine Mehrzahl bzw. eine Vielzahl an verschiedenen Gebäudewasseranschlüssen. Es ist beispielsweise möglich, dass die Mehrheit aller Gebäudewasseranschlüsse eines Wasserversorgungsnetzes, die über einen (zentralen) Wasserkanal verbunden sind, hiervon erfasst werden.

Gemäß Schritt b) wird mindestens eine zentrale Wasserzustandsgröße in einem Bereich eines (zentralen) Wasserkanals und/oder der Wasserverteileinrichtung erfasst. Auch die Erfassung dieser zentralen Wasserzustandsgröße(n) kann sensorisch oder rechnerisch erfolgen. Die zentrale Wasserzustandsgröße ist insbesondere charakteristisch für den Zustand des Wassers, welches (kurz) zuvor von der Wasserverteileinrichtung in den (zentralen Versorgungs-)Wasserkanal eingeleitet wird. Die zentrale Wasserzustandsgröße wird insbesondere in einem Bereich ermittelt, bevor eine (erste) Abzweigung ausgehend von dem Wasserkanal hin zu einem Gebäudewasseranschluss vorgesehen ist. Ganz besonders bevorzugt ist, dass diese zentrale Wasserzustandsgröße in bzw. am Auslass der Wasserverteileinrichtung erfasst wird.

Die an den unterschiedlichen Stellen des Wasserversorgungsnetzes erfassten lokalen und zentralen Wasserzustandsgrößen werden dann miteinander verglichen (Schritt c)). Dabei ist möglich, dass gleichartige Wasserzustandsgrößen miteinander verglichen werden, es ist aber auch möglich, dass unterschiedliche Wasserzustandsgrößen, beispielsweise mit einer Konkordanz-Liste, miteinander verglichen werden. Der Vergleich kann insbesondere automatisiert bzw. rechnerisch erfolgen. Es ist möglich, dass der Vergleich die Bestimmung einer Abweichung der Wasserzustandsgrößen zueinander, eine zeitliche Veränderung der Wasserzustandsgrößen miteinander bzw. wechselseitig und/oder das Überschreiten von vorgegebenen Grenzwerten bezüglich der Wasserzustandsgrößen umfasst. Die Ergebnisse des Vergleichs können erforderlichenfalls auch für nachfolgende Verfahrensschritte gespeichert oder verfügbar gemacht werden.

Schritt d) erlaubt nun das Detektieren zumindest einer Störstelle bezüglich wenigstens eines der Wasserkanäle auf Basis des Ergebnisses aus dem Vergleich nach Schritt c). Eine "Störstelle" soll insbesondere ein Areal bezeichnen, in dem die vorgegebenen bzw. erwarteten Wasserzustandsgrößen nicht mit den erfassten übereinstimmen. Eine Störstelle kann das gesamte Wasserversorgungsnetz bzw. alle Wasserkanäle umfassen, es ist aber auch möglich, einen einzelnen Wasserkanal bzw. eine einzelne "last mile" Verrohrung zu genau einem Gebäudewasseranschluss als Störstelle zu detektieren. Unter "Detektieren" wird ein generelles Auffinden einer Störstelle bzw. Störsituation, erfindungsgemäß ein Lokalisieren eines bestimmten Teilbereiches bezüglich der Wasserkanäle des Wasserversorgungsnetzes, verstanden. Das Ergebnis des Schritts d) kann beispielsweise sein, dass ausgegeben wird, dass das Wasser bzw. alle Wasserkanäle nicht erwartungsgemäß eingerichtet sind oder tatsächlich ein lokaler Abschnitt eines bzw. mehrerer weniger Wasserkanäle schadhaft ist.

Die Wasserzustandsgrößen sind erfindungsgemäß Druck und Durchfluss und können zusätzlich mindestens eine aus der folgenden Gruppe sein: Temperatur, Wasserqualität, Vibration. So ist es beispielsweise möglich, lokal bzw. zentral den Wasserdruck zu erfassen bzw. zu bestimmen. Es ist ebenso möglich, den lokalen bzw. zentralen Wasserdurchfluss zu bestimmen bzw. zu erfassen. Es ist möglich, die Wasser- und/oder Umgebungstemperatur zu bestimmen, um damit den Temperatureinfluss beispielsweise auf die Erfassung des Drucks des Wassers zu prüfen. Für die Wasserqualität können insbesondere Maßnahmen zur Analyse der Zusammensetzung des Wassers, insbesondere der Anteil von biologischen Substanzen, chemischen Substanzen etc. herangezogen werden. Es ist ebenso möglich, über den Wasserzustand etwas zu erfahren, indem Vibrationen bzw. Schall durch die Wasserkanäle hindurchgeleitet wird, wobei aus deren Reflektion Kenntnisse über die Wasserzustandsgröße gewonnen werden können. Es ist möglich, dass nur eine dieser Wasserzustandsgrößen betrachtet wird, es ist aber auch möglich, dass mehrere bzw. eine Vielzahl oder alle dieser Wasserzustandsgrößen im Rahmen des hier vorgeschlagenen Verfahrens betrachtet werden, wobei gegebenenfalls an unterschiedlichen lokalen Bereichen bzw. dem zentralen Bereich verschiedene Wasserzustandsgrößen erfasst werden. Es ist möglich, beispielsweise aufgrund von Erfahrungswissen, die erfassten lokalen bzw. zentralen Wasserzustandsgrößen miteinander zu korrelieren, um gleichwohl einen Vergleich der jeweiligen Wasserzustandsgrößen miteinander zu ermöglichen.

Es wird auch vorgeschlagen, dass während Schritt a) und/oder b) ein Wasserstrom durch mindestens einen der Gebäudewasseranschlüsse fließt. Das bedeutet mit anderen Worten insbesondere, dass das Verfahren zur Überwachung des Wasserversorgungsnetzes "online" durchgeführt wird, also während eines üblichen Verbrauchs durch die Gebäudewasseranschlüsse. Es können in einer solchen "online"-Benutzersituation einige Gebäudewasseranschlüsse geöffnet sein, sodass also Wasser verbraucht wird, und/oder andere Gebäudewasseranschlüsse geschlossen sein, hier findet also kein Verbrauch statt. In dieser Situation ist es insbesondere vorteilhaft, beispielsweise aus Erfahrungswerten, das übliche Verbraucherverhalten zu applizieren und damit die lokalen Wasserzustandsgrößen entsprechend anzupassen bzw. zu bewerten.

Weiter ist möglich, dass während zumindest Schritt a) oder b) durch mindestens einen der Gebäudewasseranschlüsse kein Wasser strömt. Dies bedeutet mit anderen Worten insbesondere, dass gegebenenfalls der Schritt a) und/oder der Schritt b) nur dann durchgeführt wird, wenn gerade festgestellt werden kann, dass kein Wasser an einem, einer Mehrzahl oder allen Gebäudewasseranschlüssen hindurchströmt, diese also nichts verbrauchen bzw. kein Wasser aus den Wasserkanälen entnehmen. Es ist möglich, einen solchen Zustand konkret zu detektieren, beispielsweise durch entsprechende Messungen, oder in Kenntnis des Verbraucherverhaltens bezüglich des Wasserversorgungsnetzes geeignete spezifische Zeitpunkte für die Durchführung des Verfahrens zu wählen, beispielsweise einen Feiertag, den Nachtbetrieb etc.

Erfindungsgemäß wird vor Schritt a) oder b) mindestens einer der Gebäudewasseranschlüsse geschlossen. Es ist also im Rahmen des Verfahrens zur Überwachung vorgesehen, dass eine konkrete Anweisung an mindestens einen, gegebenenfalls eine Mehrzahl oder sogar alle zugehörigen Gebäudewasseranschlüsse ausgesendet wird, den/die Gebäudewasseranschlüsse aktiv zu schließen. Eine solche Anweisung erfolgt elektronisch oder per Funk. Damit stellt sich ein statischer Zustand im Wasserversorgungsnetz ein, der für die hier vorliegende Analyse und das Detektieren zumindest einer Störstelle besonders geeignet ist. Insbesondere kann auf diese Weise überprüft werden, inwieweit sich bei geschlossenen Gebäudewasseranschlüssen eine zentrale Wasserzustandsgröße relativ zu einzelnen lokalen Wasserzustandsgrößen über die Zeit verändert.

Es kann zudem vorgesehen sein, dass in Schritt d) die erfassten Wasserzustandsgrößen mehrerer Schritte a) und/oder b) berücksichtigt werden. So ist es beispielsweise möglich, dass die in Schritt a) und/oder b) erfassten Wasserzustandsgrößen intermittierend erfasst werden und erst bei Überschreiten, Erreichen oder Unterschreiten eines bestimmten Grenzwertes bzw. Sollwertes die erfassten lokalen Wasserzustandsgrößen der letzten Teilschritte für einen Vergleich nach Schritt c) herangezogen werden.

Gemäß einer Weiterbildung wird vorgeschlagen, dass in Abhängigkeit des Ergebnisses aus Schritt d) mindestens ein Verschlussventil automatisch geschlossen wird. Das bedeutet, beispielsweise, dass bei einer positiven Detektierung einer Störstelle eine zielgerichtete Anweisung an ein Verschlussventil, welches Bestandteil des Wasserversorgungsnetzes ist, erfolgt und dieses damit automatisch geschlossen wird. Das Verschlussventil kann ein Teil eines Gebäudewasseranschlusses sein. Das Verschlussventil kann auch Teil der Wasserverteileinrichtung sein. Es ist möglich, dass das Schließen des Verschlussventils unmittelbar erfolgt, es ist aber beispielsweise auch möglich, dies indirekt über eine entsprechende Anweisung einer Steuereinheit für den Gebäudewasseranschluss und/oder dessen Nutzer zu veranlassen.

Es wird demnach auch als vorteilhaft angesehen, dass vor Schritt a) eine Berechtigungsanfrage an Nutzer der Gebäudewasseranschlüsse entsendet und nur nach Erhalt einer Bestätigung des Nutzers die weiteren Schritte des Verfahrens durchgeführt werden. Mit anderen Worten bedeutet dies beispielsweise, dass zu einem vorgegebenen Zeitpunkt und/oder einem vorbekannten Ereignis zunächst mit dem Gebäudewasseranschluss bzw. dessen Nutzer Kontakt aufgenommen wird, um anzufragen, ob das Überprüfungsverfahren durchgeführt werden kann. Dies kann beispielsweise umfassen, dass dann der Gebäudewasseranschluss geschlossen bzw. für einen vordefinierten Zeitpunkt geschlossen gehalten wird. Diese Anweisung zum Schließen bzw. Geschlossenhalten des Gebäudewasseranschlusses erfolgt erst nach einer entsprechenden Bestätigung des Nutzers. Eine solche Anfrage bzw. Bestätigung kann in Form eines elektronischen Datenaustauschs erfolgen, beispielsweise über Funk- und/oder mobile bzw. stationäre Endgeräte und/oder Datenerfassungsanlagen. Mit anderen Worten kann dies auch bedeuten, dass ohne Vorliegen einer entsprechenden Bestätigung die Durchführung des hier vorgeschlagenen Verfahrens blockiert ist. Dies kann solange gelten, bis eine bestimmte Anzahl von Bestätigungen von Nutzern von Gebäudewasseranschlüssen vorliegt. Es ist ebenso möglich, dass damit detektiert werden kann, welche Gebäudewasseranschlüsse im Wasserversorgungsnetz definitiv geschlossen sind, was bei der Bewertung der Ergebnisse des Verfahrens berücksichtigt werden kann und damit die Genauigkeit des Verfahrens verbessert.

Gemäß einem weiteren Aspekt wird hier ein Wasserversorgungsnetz mit einer Wasserverteileinrichtung, Wasserkanälen und Gebäudewasseranschlüssen vorgeschlagen, wobei weiter ein Störstellendetektionssystem vorgesehen ist, dass eingerichtet zur Durchführung des hier vorgeschlagenen Verfahrens ist. Das Störstellendetektionssystem kann insbesondere eine Datenverarbeitungsanlage und/oder ein Netzwerk von Datenverarbeitungsanlagen umfassen. Das Störstellendetektionssystem ist insbesondere eingerichtet, die lokalen und zentralen Wasserzustandsgrößen zu ermitteln, zu berechnen bzw. den einzelnen Abschnitten des Wasserversorgungsnetzes zuzuordnen. Es können Analyseeinheiten und -algorithmen umfasst sein, die die Durchführung des Verfahrens ermöglichen.

Erfindungsgemäß wird ein Störstellendetektionssystem mit mehreren Sensoren zur Erfassung mindestens einer Wasserzustandsgröße und Mitteln, die geeignet sind, die Schritte des hier vorgeschlagenen Verfahrens auszuführen, vorgeschlagen. Insbesondere kann dieses Störstellendetektionssystem mit Datenverarbeitungseinheiten, Prozessoren, Computern, Recheneinheiten, Speichereinheiten und elektronischen Datenverbindungen ausgestattet sein, die die Erfassung der Wasserzustandsgrößen an unterschiedlichen Bereichen des Wasserversorgungsnetzes ermöglichen und dann, gegebenenfalls zentral, berechnet und verglichen werden. Besonders bevorzugt ist dabei, dass das Störstellendetektionssystem weiter mindestens eine Funkeinheit zur Kommunikation mit zumindest einem Sensor, einem Verschlussventil, einem Gebäudewasseranschluss oder einem Mobilgerät zum Datentransfer hat, welches für eine entsprechende Kommunikation auch eingerichtet ist. Das bedeutet mit anderen Worten insbesondere, dass Daten ausgehend vom Störstellendetektionssystem hin zu mindestens einer der genannten Komponenten gesendet und/oder von dort empfangen werden können. Daten in diesem Sinne umfassen Messwerte, Nachrichten, Alarme etc.

Gemäß noch einem weiteren Aspekt wird ein Computerprogramm vorgeschlagen, umfassend Befehle, die bewirken, dass das Störstellendetektionssystem die Schritte des hier vorgeschlagenen Verfahrens ausführt. Das Computerprogramm kann insbesondere ein auf einem Speichermedium ablegbares und ausführbares Produkt sein.

Die Erfindung eignet sich insbesondere dazu, Leckage-Stellen bezüglich eines solchen Wasserversorgungsnetzes bzw. eines davon erfassten Wasserkanals zu lokalisieren.

Es ist beispielsweise möglich, über eine vorbestimmte Zeit bzw. zu konkreten Zeitintervallen Druckdaten eines zentralen Wasserkanals, welcher von der Wasserverteileinrichtung unmittelbar ausgeht, zu erfassen. Dies kann gegebenenfalls lokal über entsprechende Erfassungseinrichtungen an den Gebäudewasseranschlüssen ebenso erfolgen. Durch das Verfügbarmachen der unterschiedlichen lokalen und zentralen Wasserzustandsgrößen, hier insbesondere der Druck, kann in Echtzeit ("Real-Time") eine Information über den Fließzustand bzw. den Wasserzustand im Wasserversorgungsnetz gewonnen werden. Zum Beispiel für den Fall, dass zu erwarten ist, dass aktuell kein Wasser fließen soll (alle Verschlussventile sind geschlossen und ein vorbestimmter Druck ist in den Wasserkanälen eingestellt), würde ein Druckabfall im Wasserversorgungsnetz für eine Leckage sprechen. Diese Informationen können der Wasserverteileinrichtung zur Verfügung gestellt werden, damit diese Maßnahmen zur Reparatur bzw. Abwendung dieses Zustandes einstellt.

Weiter ist insbesondere möglich, dass ein solcher Infrastruktur-Test in der Weise eingeleitet wird, dass zunächst die Betreiber bzw. Nutzer der Gebäudewasseranschlüsse vorab informiert werden, dass zu einer vorgegebenen Zeit ein solcher Test durchgeführt wird. Die Nutzer können über eine App, eine E-Mail, einen Anruf oder dergleichen informiert bzw. gewarnt werden, und dann den vorgeschlagenen Zeitpunkt für den Test bestätigen. Wenn dann eine entsprechende Anzahl von Nutzern mit der Durchführung des Tests einverstanden ist und gegebenenfalls deren Hauptwasseranschlüsse geschlossen werden, können die Infrastruktur bzw. die Dichtheit der Wasserkanäle schnell und präzise überprüft werden, wobei insbesondere sehr genaue Lokalisierungen von Leckage-Stellen ermöglicht werden.

Das hier vorgeschlagene Verfahren bzw. die entsprechend eingerichteten Infrastrukturkomponenten ermöglichen die Detektierung von Leckagen zu einem sehr schnellen und präzisen Zeitpunkt, womit die Verschwendung von Trinkwasser vermieden, die Reduzierung der Instandsetzungskosten ermöglicht und gegebenenfalls auch die Vorhaltekosten für bereitzustellendes Wasser reduziert werden können.

Weiter ist auch möglich, insbesondere bei Einsatz einer Wasserqualitätsüberprüfung, schnell eine Vielzahl von Gebäudewasseranschlüssen zu schließen, wenn erkannt wird, dass das Wasser verschmutzt ist. Dies kann insbesondere durch eine automatische Ansteuerung vorgegebener bzw. aller Gebäudewasseranschlüsse, die ein Verschlussventil umfassen, erreicht werden.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, diese jedoch nicht darauf beschränkt sein sollen. Die Figuren sind schematisch. Gleiche Komponenten bzw. Bauteile sind regelmäßig auch mit gleichen Bezugszeichen versehen. Soweit Details einer Figur nicht explizit zwingend im Zusammenhang mit einem anderen Element der Figur gekennzeichnet sind, können diese Details mit anderen Details aus anderen Figuren oder der allgemeinen Beschreibung kombiniert werden. Es zeigen
- Fig. 1:: einen Überblick über eine Infrastruktur eines Wasserversorgungsnetzes,
- Fig. 2:: ein Fallszenario, wobei Druckdaten miteinander verglichen werden, um eine Leckage-Stelle zu lokalisieren,
- Fig. 3:: ein Fallszenario, wobei ebenfalls Druckdaten zur Lokalisierung einer Leckage verglichen werden, wobei nur ein Teil der Gebäudewasseranschlüsse daran teilnimmt,
- Fig. 4:: ein Fallszenario, wobei der Infrastrukturtest bei geschlossenen Gebäudewasseranschlüssen stattfindet,
- Fig. 5:: ein Fallszenario, bei dem ein Wasserqualitätsproblem identifiziert wird und
- Fig. 6:: eine mögliche Ablaufroutine für ein hier vorgeschlagenes Überwachungsverfahren, wobei eine zusätzliche Benutzerabfrage stattfindet.

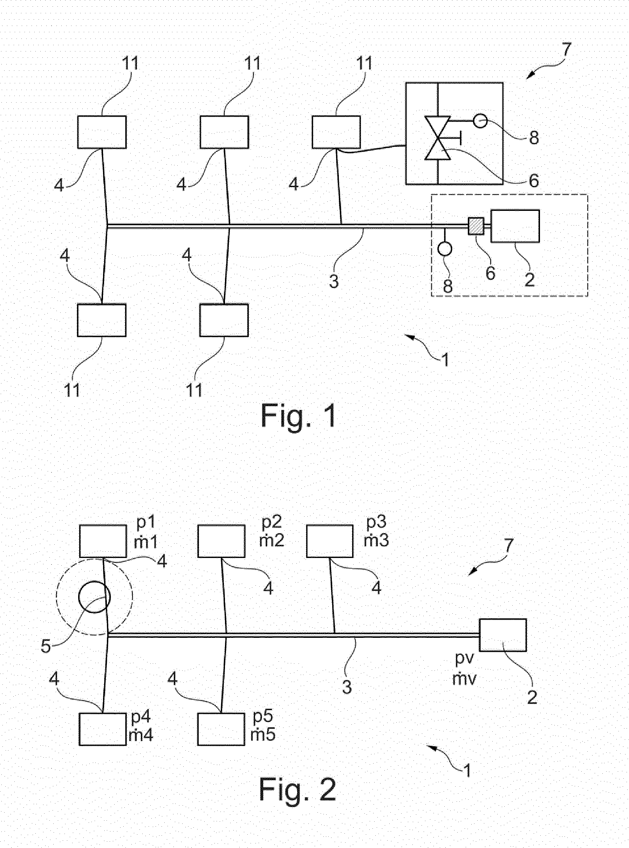

Fig. 1 veranschaulicht schematisch ein Wasserversorgungsnetz 1 mit einer (einzelnen) Wasserverteileinrichtung 2, welche rechts in Fig. 1 dargestellt ist. Die Wasserverteileinrichtung 2 umfasst hierbei ein Verschlussventil 6 sowie einen Sensor 8. Insbesondere der Sensor 8 ist dazu eingerichtet, mindestens eine zentrale Wasserzustandsgröße zu ermitteln.

Ausgehend von der Wasserverteileinrichtung 2 verläuft ein (zentraler) Wasserkanal 3, der dann diverse Abzweigungen umfasst, hin zu einer Vielzahl von Gebäudewasseranschlüssen 4. Im vorliegenden Beispiel sind fünf getrennte Gebäudewasseranschlüsse 4 vorgesehen, die jeweils einem eigenen Wasserkanal-Abschnitt ausgehend von dem zentralen Wasserkanal 3 zugeordnet sind, der individuell nur zu einem einzelnen Gebäudewasseranschluss führt und damit als sogenannte "last-mile" bezeichnet werden kann. Die Gebäudewasseranschlüsse 4 können beispielsweise einem Gebäude 11 zugeordnet sein, in dem eine Mehrzahl von Benutzern bzw. Verbrauchern angeordnet sind, die hier der Einfachheit halber nicht dargestellt wurden. Es ist möglich, dass eine Mehrzahl oder alle der beteiligten Gebäudewasseranschlüsse 4 mit einem Verschlussventil 6 und/oder mindestens einem Sensor 8 ausgeführt sind. Die Sensoren 8 und die Verschlussventile 6 können Teil eines übergeordneten Störstellendetektionssystems sein, welches in einer (hier nicht dargestellten) Datenverarbeitungsanlage bzw. der Cloud eingerichtet sein kann.

Es ist noch zu erwähnen, dass der Gebäudewasseranschluss 4 mit Mitteln zur Bestimmung des Wasserdurchflusses, der Temperatur und gegebenenfalls optional mit einer Wasserqualitätserfassung oder einer Vibrations-/Schallmesseinrichtung ausgeführt sein kann.

Für die Wasserverteileinrichtung 2 kann neben dem zentralen Verschlussventil 6 mindestens ein Sensor zur Bestimmung des Drucks, des Durchflusses, der Temperatur, der Vibration, des Schalls oder der Wasserqualität vorgesehen sein.

Fig. 2 veranschaulicht nun die Situation, wobei eine Leckage im Bereich der hier skizzierten Störstelle 5 identifiziert wird. So ist es beispielsweise möglich, dass über die Wasserverteileinrichtung 2 ein Druck pv (beispielsweise ca. 5,5 bar) eingestellt wird. Mittels des Störstellendetektionssystems 7 werden dann gemäß Schritt a) zu allen Gebäudewasseranschlüssen 4 lokale Wasserzustandsgrößen erfasst, wobei diese hier insbesondere den Durchfluss m und den Druck p umfassen. So kann beispielsweise ermittelt werden, dass der Druck p1 = 2 bar, m1 = 0 ist; p2 = 3 bar und ṁ2 ungleich 0; p3 = 5,1 bar und ṁ3 = 0; p4 = 4 bar und ṁ4 = 0 sowie p5 = 5 bar und m5 = 0 ist. Es ergibt sich ohne Weiteres, dass für die geschlossenen Gebäudewasseranschlüsse 4 in etwa derselbe Druck anliegen müsste, wie dies im Bereich der Wasserverteileinrichtung 2 eingestellt ist. Lediglich dort, wo ein Wasserfluss erreicht wird, beispielsweise bei geöffnetem Gebäudewasseranschluss und/oder einer Leckage, ist ein größerer Druckabfall zu erwarten. Hier können beispielsweise Grenzwerte festgelegt sein, wonach ein gewisser Druckabfall noch mit üblichem Verbraucherverhalten zu erklären ist, ein darüber hinausgehender Druckabfall für eine Leckage spricht. Im vorliegenden Fall ist also bei geschlossenem Gebäudewasseranschluss 4 im Bereich p1 der größte Druckabfall, was eine Lokalisierung der Leckage-Stelle bzw. Störstelle 5 im Bereich dieser "last-mile" ermöglicht.

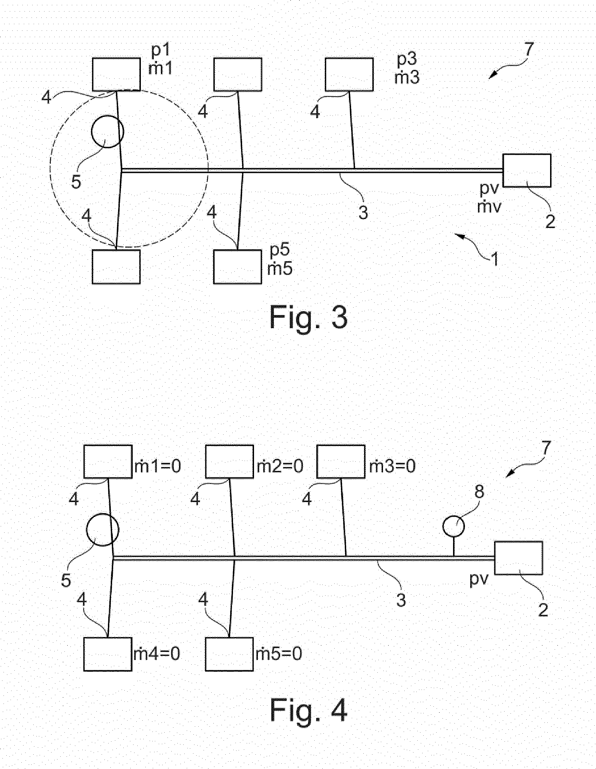

Das in Fig. 3 dargestellte Fallszenario ist im Wesentlichen gleich eingerichtet wie eben mit Bezug auf Fig. 2 erläutert, wobei jedoch hier der Gebäudewasseranschluss 4 mittig oben und unten links keine Sensorik umfasst, dort also keine Messwerte bzw. Wasserzustandsgrößen lokal erfasst werden können. Werden für die verbleibenden Gebäudewasseranschlüsse 4 ähnliche Messwerte, wie zuvor beschrieben, erfasst, führt das dazu, dass die Lokalisierungsgenauigkeit abnimmt, was hier durch den gestrichelten Kreis für die beiden linken Abschnitte des Wasserkanals für die am weitesten entfernten Gebäudewasseranschlüsse 4 symbolisiert ist. Gleichwohl erlaubt auch diese Konstellation eine sichere und fokussierte Detektierung der Leckage.

Fig. 4 zeigt ein Fallszenario, bei dem sichergestellt ist, dass alle Gebäudewasseranschlüsse geschlossen sind, also aktuell kein Verbrauch stattfindet. Dies kann zuvor entsprechend eingestellt werden, wobei dann über eine konkrete Vorgabe des Drucks pv über die Zeit beispielsweise mittels des Sensors 8 der Druckabfall gemessen werden kann. Hierfür können spezifische Routinen und Fließverhalten des Wassers in dem Wasserkanal 3 bewertet werden, wodurch ein sehr genaueres Detektieren von Leckagen ermöglicht ist, insbesondere auch bei relativ kleinen Leckagen (also mit einem relativ geringen Wasserverlust).

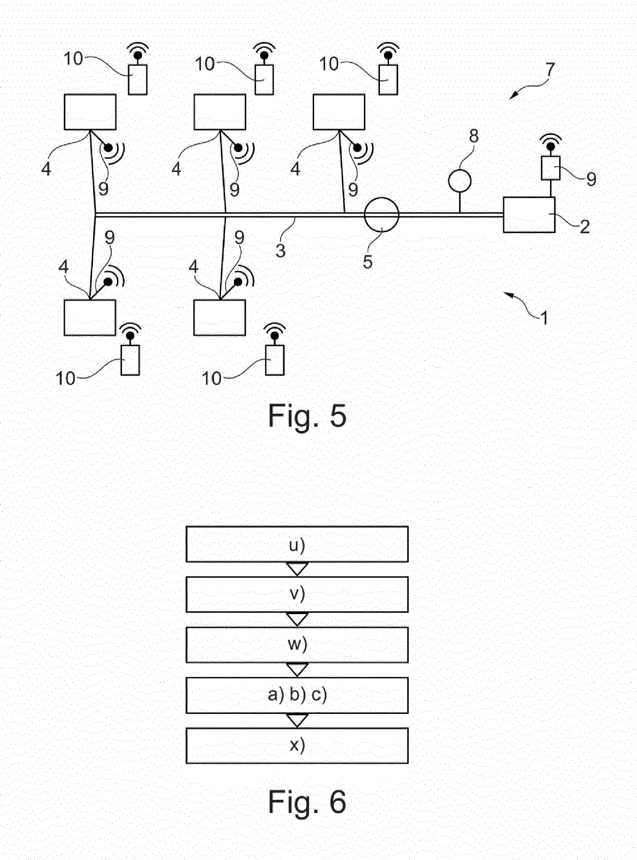

Fig. 5 veranschaulicht nun die Situation, dass ein Wasserqualitätsproblem identifiziert wird. Auch hier dient das Störstellendetektionssystem 7 dazu, beispielsweise zentral über den gezeigten Sensor 8 eine Wasserverschmutzung zu identifizieren. Das Störstellendetektionssystem 7 kann dann beispielsweise über diverse Funkeinheiten 9 an der Wasserverteileinrichtung 2 bzw. den Gebäudewasseranschlüssen 4 und/oder Mobilgeräten 10 der Nutzer Warnsignale oder Stellbefehle versenden, die zur (teilweisen) Stilllegung und/oder Flutung des Wasserversorgungsnetzes führen können.

Schließlich veranschaulicht Fig. 6 eine Variante des Überwachungsverfahrens, welches nur zu einem vordefinierten Zustand des Wasserversorgungsnetzes initiiert werden kann. So ist es beispielsweise möglich, dass zunächst gemäß u) eine Anfrage an die Benutzer der Gebäude bzw. der Gebäudewasseranschlüsse gesendet wird, die zugehörigen Verschlussventile zu schließen bzw. geschlossen zu halten für einen vorgegebenen Zeitraum.

Diese Anfrage, die beispielsweise per Funk oder per Nachricht übermittelt werden kann, verlangt dann eine individuelle Bestätigung durch den Nutzer (siehe Schritt v)).

Weiter kann vorgesehen sein, dass erst nach Vorliegen aller bzw. einer bestimmten Anzahl von Bestätigungen die Auslösung des Überwachungsverfahrens initiiert wird (Schritt w)).

Nun kann, soweit noch nicht erfolgt, gegebenenfalls automatisch jedes Verschlussventil der Gebäudewasseranschlüsse so eingestellt werden, dass diese geschlossen sind bzw. geschlossen bleiben. Ist dies sichergestellt, werden dann beispielsweise die hier vorgeschlagenen Verfahrensschritte a), b) und c) ausgeführt.

Nach Abschluss des Überwachungsverfahrens ist es möglich, dass die Berechtigung zum Eingriff bzw. Zugriff auf Daten und/oder den Betrieb der Gebäudewasseranschlüsse 4 bzw. deren zugeordnete Verschlussventile 6 und/oder Sensoren 8 wieder unterbrochen wird, was hier mit Schritt x) bezeichnet ist.

### Bezugszeichenliste

- 1: Wasserversorgungsnetz
- 2: Wasserverteileinrichtung
- 3: Wasserkanal
- 4: Gebäudewasseranschluss
- 5: Störstelle
- 6: Verschlussventil
- 7: Störstellendetektionssystem
- 8: Sensor
- 9: Funkeinheit
- 10: Mobilgerät
- 11: Gebäude

- p: Druck
- m: Durchfluss

## Patentansprüche

1. Verfahren zur Überwachung eines Wasserversorgungsnetzes (1) mit einer Wasserverteileinrichtung (2), Wasserkanälen (3) und Gebäudewasseranschlüssen (4) mittels eines Störungsdetektionssystems (7) mit mehreren Sensoren (8), umfassend zumindest die folgenden Schritte:
a) Erfassen von lokalen Wasserzustandgrößen nämlich Druck und Durchfluss, in Bereichen einer Mehrzahl von Gebäudewasseranschlüssen (4);
b) Erfassen von zentralen Wasserzustandsgrößen, nämlich Druck und Durchfluss, in zumindest einem Bereich eines Wasserkanals (3) oder der Wasserverteileinrichtung (2);
c) Vergleichen der Wasserzustandsgrößen miteinander;
d) Detektieren, nämlich Lokalisieren, zumindest einer Störstelle (5), nämlich einer Leckage, bezüglich wenigstens einem der Wasserkanäle (3) basierend auf dem Vergleich nach Schritt c), das Verfahren **dadurch gekennzeichnet, dass** zumindest vor Schritt a) oder b) mindestens einer der Gebäudewasseranschlüsse (4) elektronisch oder per Funk aktiv geschlossen wird, so dass durch den mindestens einen der Gebäudewasseranschlüsse (4) kein Wasser strömt, und dass die Leckage lokalisiert wird basierend auf einem Grenzwert für den Druckabfall.

2. Verfahren nach einem der vorhergehenden Patentansprüche, wobei während zumindest Schritt a) oder b) ein Wasserstrom durch mindestens einen der Gebäudewasseranschlüsse (4) fließt.

3. Verfahren nach einem der vorhergehenden Patentansprüche, wobei in Schritt d) die erfassten Wasserzustandsgrößen mehrere Schritte a) und b) berücksichtigt werden.

4. Verfahren nach einem der vorhergehenden Patentansprüche, wobei in Abhängigkeit des Ergebnisses aus Schritt d) mindestens ein Verschlussventil (6) automatisch geschlossen wird.

5. Verfahren nach einem der vorhergehenden Patentansprüche, wobei vor Schritt a) eine Berechtigungsanfrage an Nutzer der Gebäudewasseranschlüsse (4) entsendet und nur nach Erhalt einer Bestätigung des Nutzers die weiteren Schritte des Verfahrens durchgeführt werden.

6. Wasserversorgungsnetz (1) mit einer Wasserverteileinrichtung (2), Wasserkanälen (3) und Gebäudewasseranschlüssen (4) sowie einem Störstellendetektionssystem (7), eingerichtet zur Durchführung eines Verfahrens nach einem der vorhergehenden Ansprüche.

7. Störstellendetektionssystem (7) mit mehreren Sensoren (8) zur Erfassung von Wasserzustandsgrößen und Mitteln, die geeignet sind, die Schritte eines Verfahrens nach einem der Ansprüche 1 bis 5 auszuführen.

8. Störstellendetektionssystem (7) nach Patentanspruch 8, wobei weiter mindestens eine Funkeinheit (9) zur Kommunikation mit zumindest einem Sensor (8), einem Verschlussventil (6), einem Gebäudewasseranschluss (4) oder einem Mobilgerät (10) zum Datentransfer vorgesehen und eingerichtet ist.

9. Computerprogramm, umfassend Befehle, die bewirken, dass das Störstellendetektionssystem (7) des Anspruchs 7 oder 8 die Schritte eines Verfahrens nach einem der Ansprüche 1 bis 5 ausführt.

## Claims

1. A method for monitoring a water supply network (1) with a water distribution system (2), water channels (3) and building water connections (4) by means of a fault detection system (7) with multiple sensors (8), comprising at least the following steps:
a) capturing local water condition variables, namely pressure and flow, in areas of a plurality of building water connections (4);
b) capturing central water condition variables, namely pressure and flow, in at least one area of a water channel (3) or the water distribution device (2);
c) comparing the water condition variables with one another;
d) detecting, namely localizing, at least one fault (5), namely a leakage, with respect to at least one of the water channels (3) based on the comparison according to step c), the method being **characterized in that** at least prior to step a) or b) at least one of the building water connections (4) is actively closed electronically or by radio, so that no water flows through the at least one of the building water connections (4), and **in that** the leakage is localized based on a limit value for the pressure drop.

2. The method according to any one of the preceding claims, wherein at least during step a) or b), a flow of water flows through at least one of the building water connections (4).

3. The method according to any one of the preceding claims, wherein the water condition variables captured over several steps a) and b) are taken into account in step d).

4. The method according to any one of the preceding claims, wherein at least one closing valve (6) is automatically closed depending on the result of step d).

5. The method according to any one of the preceding claims, wherein prior to step a), an authorization request is sent to users of the building water connections (4), and the subsequent steps of the method are not carried out until after a confirmation from the user was received.

6. A water supply network (1) with a water distribution device (2), water channels (3) and building water connections (4) as well as a fault detection system (7), configured for carrying out a method according to any one of the preceding claims.

7. A fault detection system (7) with multiple sensors (8) for capturing water condition variables and means that are suitable to carry out the steps of a method according to any one of claims 1 to 5.

8. The fault detection system (7) according to claim 8, wherein, furthermore, at least one radio unit (9) is provided and configured for communication with at least one sensor (8), one closing valve (6), one building water connection (4) or one mobile device (10) for data transfer.

9. A computer program, comprising commands that cause the fault detection system (7) according to claim 7 or 8 to carry out the steps of a method according to any one of claims 1 to 5.

## Revendications

1. Procédé, destiné à superviser un réseau d'alimentation en eau (1) pourvu d'un dispositif distributeur d'eau (2), de conduites d'eau (3) et de branchements d'eau (4) sur le bâtiment, au moyen d'un système de détection (7) des dysfonctionnements doté de plusieurs capteurs (8), comprenant au moins les étapes suivantes, consistant à :
a) détecter des grandeurs locales d'état de l'eau, à savoir la pression et le débit, dans des zones d'une pluralité de branchements d'eau (4) sur le bâtiment ;
b) détecter des grandeurs centrales d'état de l'eau, à savoir la pression et le débit, dans au moins une zone d'une conduite d'eau (3) ou du dispositif distributeur d'eau (2) ;
c) comparer les unes avec les autres les grandeurs d'état de l'eau ;
d) détecter, à savoir localiser au moins une zone de dysfonctionnement (5), à savoir une fuite, en rapport à au moins l'une des conduites d'eau (3) sur la base de la comparaison selon l'étape c), le procédé **caractérisé en ce qu'**au moins avant l'étape a) ou b), l'on ferme activement, par voie électronique ou par radio au moins l'un des branchements d'eau (4) sur le bâtiment, de sorte que l'eau ne circule pas à travers l'au moins un des branchements d'eau (4) sur le bâtiment et que la fuite soit localisée, sur la base d'une valeur limite pour la chute de pression.

2. Procédé selon l'une quelconque des revendications précédentes du brevet, au moins pendant l'étape a) ou b), un flux d'eau s'écoulant à travers au moins l'un des branchements d'eau (4) sur le bâtiment.

3. Procédé selon l'une quelconque des revendications précédentes du brevet, à l'étape d), les grandeurs d'état de l'eau détectées de plusieurs étapes a) et b) étant prises en considération.

4. Procédé selon l'une quelconque des revendications précédentes du brevet, en fonction du résultat de l'étape d), au moins une vanne de fermeture (6) étant fermée automatiquement.

5. Procédé selon l'une quelconque des revendications précédentes du brevet, avant l'étape a), une demande d'habilitation à l'utilisateur des branchements d'eau (4) sur le bâtiment étant envoyée et ce n'est qu'après la réception d'une confirmation de l'utilisateur, que les étapes suivantes du procédé sont réalisées.

6. Réseau d'alimentation en eau (1), pourvu d'un dispositif distributeur d'eau (2), de conduites d'eau (3) et de branchements d'eau (4) sur le bâtiment, ainsi que d'un système de détection (7) de zones de dysfonctionnement, configuré pour réaliser le procédé selon l'une quelconque des revendications précédentes.

7. Système de détection (7) de zones de dysfonctionnement, pourvu de plusieurs capteurs (8), destinés à détecter des grandeurs d'état de l'eau et de moyens qui sont aptes à réaliser les étapes d'un procédé selon l'une quelconque des revendications 1 à 5.

8. Système de détection (7) de zones de dysfonctionnement selon la revendication 8 du brevet, par ailleurs au moins une unité radio (9) étant prévue et configurée pour la communication avec au moins un capteur (8), une vanne de fermeture (6), un branchement d'eau (4) sur le bâtiment ou un appareil mobile (10) pour le transfert de données.

9. Programme informatique, comprenant des ordres qui ont pour effet que le système de détection (7) de zones de dysfonctionnement de la revendication 7 ou 8 réalise les étapes d'un procédé selon l'une quelconque des revendications 1 à 5.
